## Europäisches Patentamt
## European Patent Office
## Office européen des brevets

(19)

(11) Numéro de publication: **0 161 970**
**B1**

(12)

# FASCICULE DE BREVET EUROPÉEN

(45) Date de publication du fascicule du brevet:
13.01.88

(21) Numéro de dépôt: **85400776.2**

(22) Date de dépôt: **18.04.85**

(51) Int. Cl.⁴: **F 23 C 11/02**, F 23 C 9/00,
B 01 J 8/38 //
C10J3/54, C10J3/56, C10J3/84,
F23G5/30

(54) Procédé et installation de traitement de matière en lit fluidisé circulant.

(30) Priorité: **20.04.84 FR 8406293**

(43) Date de publication de la demande:
**21.11.85 Bulletin 85/47**

(45) Mention de la délivrance du brevet:
**13.01.88 Bulletin 88/2**

(84) Etats contractants désignés:
**AT BE DE GB IT SE**

(56) Documents cité:
**EP-A-0 027 280
EP-A-0 082 673
EP-A-0 112 237
DE-A-3 035 828
DE-C-972 840
FR-A-2 209 074**

**POWER, vol. 127, no. 3, mars 1983, pages 128-129,
Concord, New Hampshire, US; P. BAUER:
"Multisolid fluidized-bed combustor meets
industry needs"**

(73) Titulaire: **FRAMATOME ET CIE., Tour Fiat 1, Place
de la Coupole, F-92400 Courbevoie (FR)**

(72) Inventeur: **Morin, Jean- Xavier, 9 B rue de Nevers,
F-71200 Le Creusot (FR)**
Inventeur: **Marcellin, Michel, 2 rue Mazenay,
F-71200 Le Creusot (FR)**

(74) Mandataire: **Polus, Camille, c/o Cabinet Lavoix 2,
Place d'Estienne d'Orves, F-75441 Paris Cedex 09
(FR)**

EP 0 161 970 B1

LIBER, STOCKHOLM 1988

## Description

L'invention a pour objet un procédé et une installation de traitement de matières en lit fluidisé circulant et s'applique spécialement à la combustion ou la gazéification de matières combustibles.

La technique du lit fluidisé est utilisé couramment pour le traitement de matières solides granulaires, et spécialement pour la combustion ou la gazéification de matières combustibles solides comme du charbon, du lignite, du bois et des déchets de biomasse.

Une installation de traitement en lit fluidisé comprend essentiellement un réacteur de fluidisation constitué d'une chambre allongée à axe vertical munie à sa base de moyens d'injection d'un gaz de fluidisation avec un débit variable. La matière est introduite, sous forme de particules, dans la chambre de fluidisation, au-dessus d'une grille de répartition homogène du gaz, différents moyens de fluidisation pouvant être employés.

On produit ainsi à l'intérieur de la chambre de fluidisation un courant ascendant de gaz évacué à la partie supérieure de la chambre et constitué du gaz de fluidisation et des produits gazeux issus du traitement, par exemple de la combustion de la matière. On sait qu'en réglant la vitesse de circulation des gaz, il est possible de fonctionner suivant différents régimes de fluidisation. La mise en suspension des particules commence en effet à partir d'une vitesse minimale de fluidisation. Cependant, si la vitesse de fluidisation dépasse une valeur pouvant aller par exemple de 2 à 6 m/s et qui dépend de la granulométrie et de la densité des particules, la plus grande partie de celles-ci est susceptible d'être entraînée par le haut avec les gaz. On distingue alors à l'intérieur de la chambre de fluidisation une zone inférieure dense et une zone supérieure plus diluée qui s'étend jusqu'à la partie supérieure de la chambre de fluidisation, la limite entre les deux zones n'étant d'ailleurs pas nette. A sa partie supérieure, la chambre de fluidisation débouche dans un circuit d'évacuation des gaz qui passe par un dispositif de séparation du genre cyclone dans lequel on récupère les particules solides entraînées avec les gaz, ceux-ci étant évacués, après épuration, par une sortie supérieure du séparateur alors que les particules récupérées s'accumulent à la base et sont évacuées par un orifice de sortie inférieure qui est relié au réacteur par un circuit de recyclage dans le lit fluidisé des particules récupérées. Ce circuit de recyclage est souvent constitué d'une conduite en forme de siphon dans lequel les particules circulent sous forme dense et assurent une étanchéité permettant d'équilibrer les pressions entre le reacteur en lit fluidisé et le séparateur.

Au cours de leur trajet de retour vers le réacteur en lit fluidisé, les particules peuvent subir un traitement dans un dispositif externe placé soit directement sur la conduite de recyclage, soit en dérivation. Par exemple, on peut faire passer les particules dans un échangeur de chaleur constitué d'une cuve à l'intérieur de laquelle peut être placé un faisceau de tubes d'échange parcourus par un fluide caloporteur. Le coefficient de transfert de chaleur est augmenté si l'on met les particules en suspension par circulation d'un courant ascendant de gaz de fluidisation introduit à la partie inférieure de la cuve. Selon les cas, les particules peuvent être alimentées à la base de la cuve ou à sa partie supérieure et être évacuées de façon connue, par exemple par surverse vers une conduite de recyclage qui débouche dans le réacteur.

L'invention a pour objet des perfectionnements apportés au fonctionnement d'un tel dispositif pour en améliorer le rendement et elle permet en outre de mettre en oeuvre des traitements particuliers.

On a constaté en effet que le rendement de l'échangeur dépend de la granulométrie des particules et en particulier de l'étendue de spectre granulométrique. En effet, il est plus facile de régler les conditions de fonctionnement et notamment de fluidisation lorsqu'on traite des particules de granulométrie relativement homogène. Or, lorsqu'un lit fluidisé fonctionne en régime circulant, on n'est précisément pas maître de la granulométrie des particules mises en circulation étant donné que la vitesse de fluidisation est réglée de telle sorte que la plus grande partie des particules puisse être entraînée avec les gaz.

Pour remédier à cet inconvénient il est connu, notamment dans l'article POWER, vol 127, n° 3, Mars 1983, pages 128-129, Concord, New Hampshire, P. BAUR. USA, de soumettre les particules recyclées, sur le trajet de retour à un traitement effectué en lit fluidisé dans un dispositif externe comportant un compartiment de filtration parcouru par un gaz de fluidisation et un compartiment de traitement accolé audit compartiment de filtration. Ce dispositif a pour but une simple augmentation du temps de séjour des particules dans le lit afin qu'elles ne quittent pas la chambre de combustion incomplètement brûlées.

On connaît également dans le EP-A-27 280 un procédé dans lequel un gaz est introduit à la base du lit fluidisé par un conduit séparé pour agglomérer et soutirer les cendres à la partie inférieure dudit lit fluidisé.

Suivant l'invention, on soumet les particules fines dans un compartiment accolé au compartiment de filtration à un traitement d'agglomération des cendres par formation dans ledit compartiment d'une zone à haute température, les cendres agglomérées étant soutirées à la base du compartiment de traitement et les particules fines imbrûlées étant renvoyées au lit fluidisé par un circuit de recyclage.

L'invention permet en particulier d'améliorer le rendement d'un échangeur de chaleur en lit fluidisé placé sur le circuit de retour d'un réacteur de combustion ou de gazéification.

L'installation suivant l'invention pour la mise en oeuvre du procédé est caractérisée en ce que le compartiment de traitement est muni de moyens d'agglomération des cendres, d'une sortie inférieure munie de moyens de soutirage des cendres agglomérées, et d'une sortie supérieure des particules fines imbrûlées débouchant dans le second circuit de recyclage vers le lit fluidisé.

De façon avantageuse, le compartiment de traitement comporte un fond de trémie prolongé vers le bas par un conduit resserré dans l'axe duquel passe une conduite d'injection d'un gaz comburant de diamètre inférieur à celui du conduit resserré, de façon à déterminer un espace annulaire de mise en communication de la trémie avec une chambre de récupération inférieure dans laquelle est injecté un gaz de fluidisation remontant dans la chambre de traitement par l'espace annulaire, la conduite d'injection de gaz comburant débouchant au centre de la partie inférieure du compartiment de traitement pour y former une zone à haute température d'agglomération des cendres en particules assez lourdes pour passer dans l'espace annulaire à contre-courant du gaz de fluidisation et tomber dans la chambre inférieure de récupération d'où ils sont évacués par un dispositif de soutirage.

Mais l'invention sera mieux comprise par la description suivante de deux modes de réalisation particuliers, donnés à titre d'exemples et représentés sur les dessins annexés.

La figure 1 représente l'ensemble d'une installation de production de vapeur par combustion en lit fluidisé, muni du perfectionnement selon l'invention.

La figure 2 représente schématiquement un second mode de réalisation de l'invention.

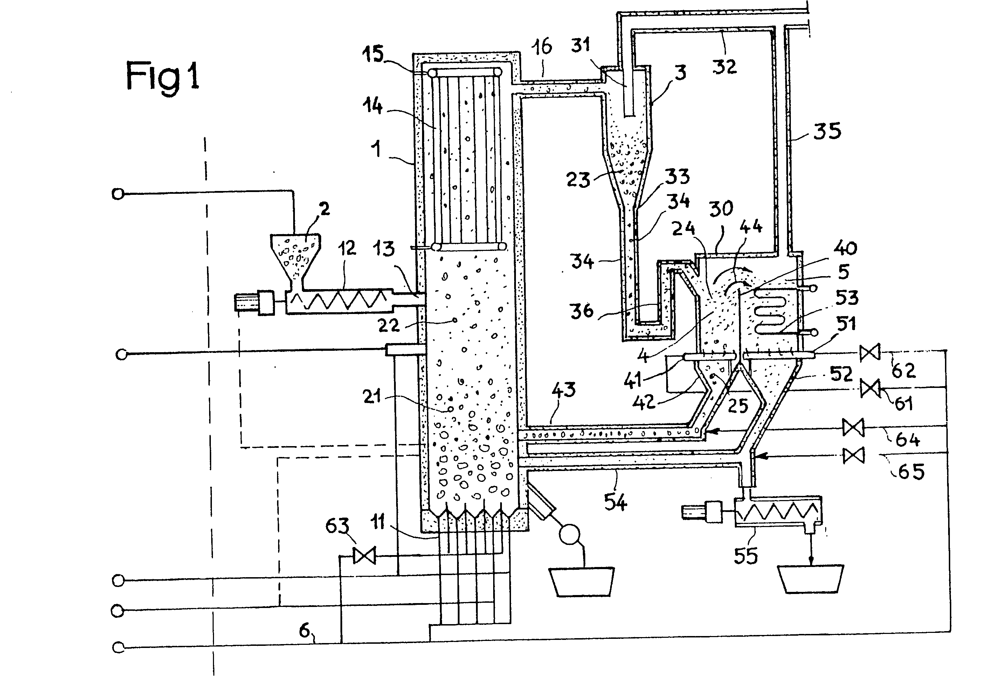

Sur la figure 1, on a représenté une chaudière de production de vapeur comprenant un réacteur en lit fluidisé constitué d'une chambre allongée 1, à axe vertical, recouverte d'un revêtement réfractaire et alimentée en matière à traiter 2 sous forme de particules, par exemple un combustible, par un dispositif d'alimentation 12 constitué par exemple d'une trémie de chargement reliée à un dispositif d'alimentation à vis débouchant par un orifice 13 à l'intérieur du réacteur 1. Celui-ci est munie à sa base de moyens de fluidisation des particules 2 constitués, dans l'exemple représenté, de plusieurs rampes 11 d'injection d'un gaz de fluidisation qui peut être par exemple un mélange d'air et de gaz combustible brûlant à sa sortie dans le réacteur 1. A la partie supérieure de celui-ci est placé en outre un échangeur tubulaire 14 constitué d'un faisceau de tubes alimentés en eau et fournissant de la vapeur à un circuit d'utilisation 15.

Le débit des rampes d'injection 11 est réglé de façon que la vitesse de fluidisation soit suffisante pour déterminer un fonctionnement en lit circulant. Les particules 2 forment alors, à l'intérieur de la chambre 1, un lit fluidisé comprenant une zone dense 21 surmontée d'une zone diluée 22 contenant une forte proportion de particules entraînées avec les gaz.

Les gaz de fluidisation qui se mélangent aux fumées issues de la combustion sont évacués avec les particules entraînées à la partie supérieure de la chambre 1 par une conduite d'évacuation 16 débouchant dans un séparateur 3 constitué par exemple d'un cyclone comportant une cheminée axiale 31 d'évacuation des gaz épurés vers un conduit de fumées 32 et dont le fond en forme de trémie débouche par une sortie inférieure 33 dans un circuit 34 d'évacuation des particules récupérées 23. Celui-ci passe par une chambre de traitement 30, en l'occurence un échangeur de chaleur permettant de récupérer une partie de la chaleur interne des particules recyclées avant que celles-ci soient réintroduites dans la chambre de fluidisation 1.

Selon la caractéristique essentielle de l'invention, le compartiment de traitement 30 est constituée de deux compartiments accolés 4 et placés à l'intérieur d'une même enceinte 30 et séparés par une cloison 40.

Chacun des deux compartiments est muni à sa base d'une rampe d'injection d'un gaz de fluidisation, respectivement 41, 51 et d'un fond en forme de trémie, respectivement 42, 52, placés au-dessous de la rampe de fluidisation et débouchant chacun dans un circuit spécifique, respectivement 43, 54, de recyclage dans le lit fluidisé 21.

Les deux rampes 41, 51, ainsi que la rampe 11 de fluidisation de la chambre principale 1 sont reliées à un même circuit 6 d'alimentation en gaz de fluidisation, par exemple de l'air, chacune étant munie d'un organe de réglage du débit, respectivement 61, 62, 63.

Selon une caractéristique avantageuse, le siphon d'entrée 36 qui est placé généralement sur le circuit de recyclage 3 des particules avant l'entrée dans le réacteur 1 est ménagé, dans le cas présent, sur la conduite 34 d'évacuation des particules du séparateur 2 et débouche à la partie supérieure du compartiment 4 qui reçoit ainsi l'ensemble des particules 23 entraînées avec les gaz et récupérées dans le séparateur 3. Le dispositif de traitement 30 est donc bien isolé du réacteur de traitement 1, vers l'amont par le siphon 36 et vers l'aval par les deux circuits de recyclage 43 et 54 remplis de matière, ce qui permet, notamment, d'y effectuer un traitement en lit fluidisé.

Dans un fonctionnement en lit circulant, les particules entraînées 22 ont un spectre granulométrique large. Grâce à l'organe 6 de réglage du débit de fluidisation injecté par la rampe 41, on peut régler la vitesse de fluidisation de façon à ne mettre en suspension dans le compartiment que les particules 24 de dimensions inférieures à une limite choisie. Les particules 25 les plus grosses, constituées essentiellement d'imbrûlés, tombent donc dans la trémie 42 qui débouche dans un premier circuit 43 de recyclage des particules 25 dans le réacteur de traitement 1, le recyclage étant facilité par une injection d'air avec un débit réglable au moyen d'une conduite 64 reliée au circuit d'air 6 et débouchant à l'extrémité amont de la conduite de recyclage 43.

A l'intérieur du compartiment 4 on réalise ainsi une filtration des particules, la partie la plus fine 24, inférieure à la limite choisie, étant mise en suspension et passant par surverse au-dessus de la cloison 40 par une sortie supérieure 44, pour arriver dans le second compartiment 5 dans lequel se réalise le traitement. Dans l'exemple représenté, le compartiment 5 est muni simplement d'un faisceau tubulaire 53 alimenté en eau qui se vaporise dans le compartiment 5 en récupérant la chaleur des particules fines, la vapeur formée étant envoyée au circuit d'utilisation 15.

Grâce aux dispositions selon l'invention, le compartiment d'échange de chaleur 5 traite des particules 24 de granulométrie homogène et l'on peut donc régler le débit d'air de fluidisation injecté par la rampe 51 de façon à réaliser l'échange de chaleur dans des conditions optimales. En effet, la vitesse de fluidisation est réglée de telle sorte que les particules 24 venant du compartiment de filtration 4 soient simplement mises en suspension et descendent lentement au contact de l'organe d'échange 53, en perdant leur chaleur, jusqu'à la trémie 52 qui débouche dans un second circuit de recyclage 54 relié également à une conduite 65 d'injection d'air de fluidisation pour faciliter le recyclage.

Auparavant, étant donné le large intervalle granulométrique des particules passant dans l'échangeur, on ne pouvait pas refroidir celles-ci de la même façon puisque les plus grosses particules se refroidissent plus lentement. Dans la disposition selon l'invention, les plus grosses particules 25, constituées essentiellement d'imbrûlés, ne sont pas refroidies et se réenflamment donc rapidement lorsqu'elles sont réinjectées dans le lit fluidisé. En revanche, l'échange de chaleur se produit dans des conditions optimales au contact des particules fines 24 comportant une forte proportion de cendres dont on peut contrôler plus facilement la température.

L'air de fluidisation injecté par les rampes 41 et 51 se rassemble à la partie supérieure de l'enceinte 30 et est évacué par une conduite de sortie 35 reliée au conduit de fumée 32. Les fumées peuvent alors, de façon classique, être épurées dans un autre séparateur puis passer dans un récupérateur de chaleur.

Etant donné que les particules fines 24 refroidies dans le compartiment 5 comportent une forte proportion de cendres on peut juger préférable d'évacuer directement celles-ci par un dispositif de soutirage 55. Dans ce cas, on ne recycle par le circuit 54 que le débit de particules fines refroidies nécessaires par exemple au contrôle de la température de combustion.

Mais l'invention peut faire l'objet d'un mode de réalisation plus perfectionné, utilisable spécialement lorsque la production de cendres est importante, par exemple pour la gazéification du charbon.

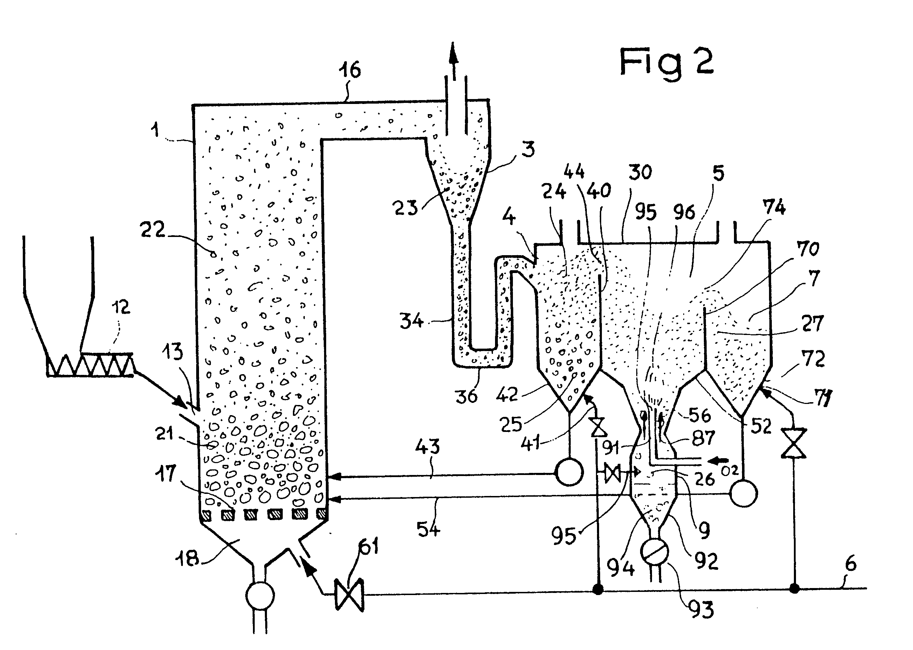

Dans ce mode de réalisation représenté schématiquement sur la figure 2, la réaction de gazéification est effectuée en lit fluidisé dans un réacteur 1 muni à sa base de moyens de fluidisation comme, par exemple, une grille de répartition 17 surmontant un plénum 18 dans lequel débouche un circuit 61 d'alimentation en gaz de fluidisation. Le combustible, par exemple du bois, est introduit par un dispositif de dosage 12 et la vitesse de fluidisation est réglée de telle sorte que la vitesse de circulation des gaz à l'intérieur de la chambre 1 permette un fonctionnement en lit circulant. Comme précédemment, les gaz et les particules entrainées passent dans un séparateur 3 relié au dispositif de traitement 30 par la conduite 34. Dans le mode de réalisation représenté, le dispositif 30 est constitué de trois compartiments accolés 4, 5 et 7, séparés par des cloisons 40 et 770 et munis chacun d'un fond en forme de trémie, respectivement 42, 52 et 72.

Le premier compartiment 4 fonctionne d'une façon analogue à celle décrite précédemment et assure la filtration des particules 25 les plus grosses, constituées d'imbrûlés, qui sont recyclées directement dans le lit fluidisé par le premier circuit de recyclage 43.

Les particules les plus fines 24, dont la dimension est inférieure à la limite déterminée par la vitesse du gaz de fluidisation injecté par la rampe 41, sont entrainées vers le haut et passent par surverse par l'orifice 44, au-dessus de la cloison 40 pour tomber dans le compartiment de traitement 5. Celle-ci est munie d'un fond en forme de trémie 52 prolongée par un conduit resserré 56 en forme de venturi qui débouche dans un réceptacle formé par une chambre inférieure 9. Dans l'axe du conduit resserré 56 passe une conduite 91 de plus faible diamètre permettant ainsi de déterminer un espace annulaire resserré 87.

La chambre inférieure 9 est munie elle-même à sa base d'une trémie 92 qui débouche dans un dispositif de soutirage 93 par exemple en forme de sas et qui est remplie d'un bain liquide 94.

Au-dessus de ce bain liquide débouche une conduite 95 d'injection d'un agent gazeux de fluidisation avec un débit réglable. Le gaz de fluidisation, injecté dans la chambre 9, remonte donc dans le compartiment 5 en passant par l'espace annulaire 87 et assure la fluidisation des particules 24 entrant dans le compartiment 5. Celles-ci sont constituées de cendres et de particules fines imbrûlées. La conduite 91 est alimentée par un gaz comburant, par exemple de l'oxygène, et débouche au centre de la trémie 52. On réalise donc ainsi au centre de la partie inférieure du compartiment 5 une zone 96 à haute température dans laquelle se réalise l'agglomération des cendres. Celles-ci, en s'agglomérant, forment des particules 26 qui finissent par être trop lourdes pour rester en suspension et tombent dans le conduit resserré 56 puis dans la chambre de récupération 9. Les particules agglomérées 26 se refroidissent dans le bain liquide 94 et sont évacuées par le dispositif de soutirage 93. En revanche, les particules fines 27 constituées d'imbrûlés ne s'agglomèrent pas et restent en suspension dans le compartiment d'agglomération 5 pour passer par surverse par une sortie supérieure 74, au-dessus de la cloison 70 et tomber dans le troisième compartiment 7 où elles sont stockées avant d'être recyclées avec un débit réglable dans le réacteur de fluidisation 1 par un second circuit de recyclage 54. Une rampe 71 de fluidisation d'un agent gazeux est placée à la base du compartiment de stockage 7 et permet de régler la vitesse de fluidisation et par conséquent de contrôler le débit de particules recyclées par le circuit de recyclage 54, d'autres moyens de réglage du débit pouvant évidemment être utilisés. Certains traitements pourraient éventuellement être effectués sur les particules 27 dans le compartiment de stockage 7.

La séparation granulométrique réalisée, selon l'invention, sur le circuit de recyclage, pourrait présenter des avantages dans d'autres traitements réalisés en lit circulant, par exemple pour la calcination des matières minérales, le traitement des liqueurs noires de papeterie, la calcination des pyrites, etc ...

**Revendications**

1. Procédé de traitement de matière en lit fluidisé circulant, dans lequel la matière à traiter est introduite sous forme de particules (2) dans une chambre de fluidisation (1) munie à sa base de moyens (11) de fluidisation par circulation ascendante d'un gaz à une vitesse réglée de façon à fonctionner en lit circulant, et débouchant à sa partie supérieure dans un circuit (16) d'évacuation des gaz et des particules entraînées passant par un organe (3) de récupération des particules (23), ces dernières étant renvoyées dans le lit fluidisé (21) par un circuit (34) de recyclage et soumises sur le trajet de retour à un traitement effectué en lit fluidisé dans un dispositif externe (30) comportant un compartiment de filtration (4) et un compartiment de traitement (5) accolé au compartiment de filtration, ledit compartiment de filtration (4) étant parcouru par un gaz de fluidisation à une vitesse réglée de façon à ne mettre en suspension que les particules de dimensions inférieures à une limite donnée et à récupérer les particules imbrûlées (25) les plus grosses qui sont recyclées directement dans le lit fluidisé (21), caractérisé par le fait que l'on soumet les particules fines (24) dans le compartiment voisin (5) à un traitement d'agglomération des cendres par formation dans le compartiment de traitement (5) d'une zone (96) à haute température, les cendres agglomérées (26) étant soutirées à la base du compartiment de traitement (5) et les particules fines imbrûlées (27) étant renvoyées au lit fluidisé (21) par un circuit de recyclage (54).

2. Procédé de traitement selon la revendication 1, caractérisé par le fait que l'on garde en réserve les particules fines imbrûlées (27) sortant du compartiment de traitement (5) dans une chambre de stockage (7) à partir de laquelle on alimente le second circuit de recyclage (54).

3. Installation de traitement de matières en lit fluidisé circulant, comprenant un réacteur de fluidisation (1) alimenté en matières (2) sous forme de particules et muni à sa base de moyens (11) de fluidisation par circulation ascendante d'un gaz à une vitesse suffisante pour déterminer un fonctionnement en lit circulant, les particules étant entraînées avec les gaz vers la partie supérieure de la chambre qui débouche dans un circuit d'évacuation (16) comprenant un organe (3) de récupération des particules entraînées (22) comportant un orifice (31) de sortie des gaz épurés et un orifice (33) de sortie des particules recupérées (23), relié au réacteur de fluidisation (1) par un circuit de recyclage dans le lit fluidisé (21) des particules récupérées (23), sur lequel est branché un dispositif (30) de traitement externe desdites particules (23) comprenant un compartiment de filtration (4) muni de moyens d'injection d'un gaz de fluidisation et un compartiment de traitement (5) accolé audit compartiment de filtration, la vitesse de fluidisation dans le compartiment de filtration (4) étant réglée de façon à permettre seulement la mise en suspension des particules (24) de dimension inférieure (42) à une limite donnée, et à récupérer les particules imbrûlées (25) de granulométrie supérieure à celle des cendres, caractérisée par le fait que le compartiment de traitement (5) est muni de moyens (91, 96) d'agglomération des cendres, d'une sortie inférieure (56) munie de moyens (9) de soutirage des cendres agglomérées (26) et d'une sortie supérieure (74) des particules fines imbrûlées (27) débouchant dans le second circuit de recyclage (54) vers le lit fluidisé (21).

4. Installation de traitement de matière selon la revendication 3 caractérisée par le fait que la chambre de traitement comporte un fond en forme de trémie prolongé vers le bas par un conduit resserré dans l'axe duquel passe, une conduite d'injection d'un gaz comburant de diamètre inférieur à celui du conduit resserré de façon à déterminer un espace annulaire de mise en communication de la trémie avec une chambre inférieure dans laquelle est injecté un gaz de fluidisation remontant dans la chambre de traitement par l'espace annulaire, que la conduite d'injection de gaz comburant débouche au centre de la partie inférieure de la chambre de traitement pour y former une zone à haute température d'agglomération des cendres en morceaux assez lourds pour passer dans l'espace annulaire à contre courant du gaz de fluidisation et tomber dans la chambre inférieure de récupération d'où ils sont évacués par un dispositif de soutirage.

5. Installation selon la revendication 3 de traitement de matières combustibles, caractérisée par le fait que la sortie supérieure (74) du compartiment de traitement (5) débouche dans un compartiment de stockage des particules fines imbrûlées (27) débouchant à sa base dans le second circuit de recyclage (54) et muni de moyens (71) de régulation du débit de recyclage des particules.

6. Installation de traitement de matières selon l'une des revendications 3 à 5, caractérisée par le fait que le dispositif de traitement (30) est isolé du réacteur de traitement (1) par un siphon (36) ménagé sur la conduite (34) d'évacuation des particules récupérées (23) dans le séparateur (3) et débouchant dans le compartiment de filtration (4).

## Patentansprüche

1. Verfahren zur Materialbehandlung in einer zirkulierenden Wirbelschicht, bei dem das zu behandelnde Material in Form von Partikeln (2) in eine Fluidisierkammer (1) eingeführt wird, die an ihrer Basis mit Mitteln (11) zur Fluidisierung durch aufsteigende Zirkulation eines Gases mit geregelter Geschwindigkeit zum Funktionieren als zirkulierende Schicht versehen ist und an ihrem oberen Teil in einen Kreislauf (16) zum Abführen der Gase und der mitgeführten Partikel mündet, die durch ein Organ (3) zur Wiedergewinnung der Partikel (23) durchtreten, wobei die letzteren in der Wirbelschicht (21) durch einen Rückführungskreislauf (34) rückgeführt werden und auf der Rücklaufbahn einer Behandlung unterzogen werden, die in einer Wirbelschicht in einer äußeren Vorrichtung (30) durchgeführt wird, die einen Filtrierraum (4) und einen an den Filtrierraum angebauten Behandlungsraum (5) aufweist, wobei der Filtrierraum (4) von einem Fluidisiergas mit einer derart geregelten Geschwindigkeit durchströmt wird, daß nur die Partikel mit Abmessungen kleiner als eine gegebene Grenze in Suspension versetzt werden und die gröberen unverbrannten Partikel (25) wiedergewonnen werden, die direkt in die Wirbelschicht (21) rückgeführt werden, dadurch gekennzeichnet, daß die feinen Partikel (24) im benachbarten Raum (5) einer Behandlung zur Agglomeration der Verbrennungsrückstände durch Bildung einer Zone (96) mit hoher Temperatur im Behandlungsraum (5) unterzogen werden, wobei die agglomerierten Verbrennungsrückstände (26) an der Basis des Behandlungsraums (5) abgezogen werden und die feinen unverbrannten Partikel (27) durch einen Rückführungskreislauf (54) in die Wirbelschicht (21) zurückgeführt werden.

2. Behandlungsverfahren nach Anspruch 1, dadurch gekennzeichnet, daß die feinen unverbrannten Partikel (27) im Vorrat gehalten werden, die aus dem Behandlungsraum (5) in eine Speicherkammer (7) austreten, ausgehend von der der zweite Rückführungskreislauf (54) versorgt wird.

3. Anlage zur Materialbehandlung in einer zirkulierenden Wirbelschicht, umfassend einen Fluidisierreaktor (1), der mit Materialien (2) in Form von Partikeln versorgt wird und an seiner Basis mit Mitteln (11) zur Fluidisierung durch aufsteigende Zirkulation eines Gases mit einer zum Bestimmen einer Funktion in einer zirkulierenden Schicht ausreichenden Geschwindigkeit versehen ist, wobei die Partikel mit den Gasen zum oberen Teil der Kammer mitgeführt werden, die in einen Auslaßkreislauf (16) umfassend ein Organ (3) zur Wiedergewinnung der mitgeführten Partikel (22) mündet, das eine Auslaßöffnung (31) für die gereinigten Gase und eine Auslaßöffnung (33) für die wiedergewonnenen Gase (23) aufweist, die mit dem Fluidisierreaktor (1) über einen Kreislauf zur Rückführung der wiedergewonnenen Partikel (23) in die Wirbelschicht (21) verbunden ist, an dem eine Vorrichtung (30) zur äußeren Behandlung der Partikel (23) angeschlossen ist, die einen Filtrierraum (4), der mit Mitteln zum Zuführen eines Fluidisiergases versehen ist, und einen an den Filtrierraum angebauten Behandlungsraum (5) umfaßt, wobei die Fluidisiergeschwindigkeit im Filtrierraum (4) auf solche Weise geregelt ist, daß lediglich das Versetzen der Partikel (24) mit kleinerer Abmessung (42) als eine gegebene Grenze in Suspension gestattet ist, und die unverbrannten Partikel (25) mit gröberer Körnung als derjenigen der Verbrennungsrückstände rückgeführt werden, dadurch gekennzeichnet, daß der Behandlungsraum (5) mit Mitteln (91, 96) zur Agglomeration der Verbrennungsrückstände, einem unteren Auslaß (56), der mit Mitteln (9) zum Abführen der agglomerierten Verbrennungsrückstände (26) versehen ist, und einem oberen Auslaß (74) für die feinen unverbrannten Partikel (27) versehen ist, der in den zweiten Rückführungskreislauf (54) zur Wirbelschicht (21) mündet.

4. Anlage zur Materialbehandlung nach Anspruch 3, dadurch gekennzeichnet, daß die Behandlungskammer einen trichterförmigen Boden, der nach unten durch eine sich verengende Leitung in der Achse verlängert ist, von der sie verläuft, eine Leitung zur Zuführung eines Brenngases mit kleinerem Durchmesser als demjenigen der sich verengenden Leitung derart aufweist, daß ein Ringraum zur Verbindung des Trichters mit einer unteren Kammer bestimmt wird, in den ein in der Behandlungskammer durch den Ringraum aufsteigendes Fluidisiergas zugeführt wird, daß die Leitung zur Zuführung von Brenngas im Zentrum des unteren Teils der Behandlungskammer mündet, um dort eine Zone mit hoher Temperatur zur Agglomerierung der Verbrennungsrückstände in ausreichend schweren Stücken zu bilden, um im Ringraum im Gegenstrom zum Fluidisiergas durchzutreten und in die untere Wiedergewinnungskammer zu fallen, wo sie durch eine Entnahmevorrichtung abgeführt werden.

5. Anlage nach Anspruch 3 zur Behandlung von Brennstoffen, dadurch gekennzeichnet, daß der obere Auslaß (74) des Behandlungsraums (5) in einen Speicherraum für die feinen unverbrannten Partikel (27) mündet, der an seiner Basis in den zweiten Rückführungskreislauf (54) mündet und mit Mitteln (71) zur Regulierung des Durchsatzes zur Rückführung der Partikel versehen ist.

6. Anlage zur Materialbehandlung nach einem der Ansprüche 3 bis 5, dadurch gekennzeichnet, daß die Behandlungsvorrichtung (30) vom Behandlungsreaktor (1) durch einen Siphon (36) isoliert ist, der an der Leitung (34) zum Auslassen der wiedergewonnenen Partikel (23) in den Abscheider (3) angebracht ist und in den Filtrierraum (4) mündet.

## Claims

1. A method for processing materials in a circulating fluidized bed, in which the material to be processed is introduced in the form of particles (2) in a fluidization chamber (1) provided at its base with means (11) for effecting a fluidization by a rising circulation of a gas at a velocity which is so regulated as to operate as a circulating bed, and communicating in its upper part with a circuit (16) discharging the gases and entrained particles passing through an element (3) for recovering particles (23), the latter being returned to the fluidized bed (21) through a recycling circuit (34) and subjected in the return path to a processing which is carried out in a fluidized bed in an exterior device (30) having a filtration compartment (4) and a processing compartment (5) adjacent to the filtration compartment, said filtration compartment (4) being traversed by a fluidization gas at a velocity which is so regulated as to put into suspension only the particles having sizes smaller than a given limit and to recover the largest unburnt particles (25) which are directly recycled in the fluidized bed (21), characterised in that the fine particles (24) are subjected in the neighbouring compartment (5) to a process for agglomerating the ashes by formation in the processing compartment (5) of a high temperature zone (96), the agglomerated ashes (26) being withdrawn at the base of the processing compartment (5) and the unburnt fine particles (27) being returned to the fluidized bed (21) through a recycling circuit (54).

2. A method according to claim 1, characterised in that the unburnt fine particles (27) issuing from the processing compartment (5) are kept in reserve in a storage chamber (7) from which the second recycling circuit (54) is fed.

3. An installation for processing materials in a circulating fluidized bed, comprising a fluidization reactor (1) fed with materials (2) in the form of particles and provided at its base with means (11) for effecting a fluidization by a rising circulation of a gas at sufficient velocity to cause an operation with a circulating bed, the articles being entrained with the gases to the upper part of the chamber which communicates with a discharge circuit (16) including means (3) for recovering the entrained particles (22) comprising an outlet orifice (31) for the purified gases and an outlet orifice (33) for the recovered particles (23) connected to the fluidization reactor (1) through a circuit for effecting a recycling of the recovered particles (23) in the fluidized bed (21) to which is connected an external device (30) for processing said particles (23) including a filtration compartment (4) provided with means for injecting a fluidization gas and a processing compartment (5) adjacent to said filtration compartment, the velocity of fluidization in the filtration compartment (4) being so regulated as to permit solely putting into suspension particles (24) of a size (42) smaller than a given limit, and recovering the unburnt particles (25) having a particle size larger than that of the ashes, characterised in that the processing compartment (5) is provided with means (91, 96) for agglomerating the ashes, a lower outlet (56) provided with means (9) for withdrawing the agglomerated ashes (26) and an upper outlet (74) for the unburnt fine articles (27) communicating with the second recycling circuit (54) leading to the fluidized bed (21).

4. A material processing installation according to claim 3, characterised in that the processing chamber has a bottom in the form of a hopper downwardly extended by a tapering conduit on the axis of which extends a conduit for injecting a comburent gas having a diameter smaller than that of the tapering conduit so as to define an annular space for putting the hopper in communication with a lower chamber in which there is injected a fluidization gas rising in the processing chamber through the annular space, the comburent gas injection conduit opening out at the centre of the lower part of the processing chamber so as to form therein a high temperature zone for agglomerating the ashes into pieces which are heavy enough to pass through the annular space in a counter-current manner relative to the fluidization gas and to fall into the lower recovering chamber from which they are discharged by a withdrawal device.

5. An installation according to claim 3 for processing combustible materials, characterised in that the upper outlet (74) of the processing compartment (5) opens into a compartment (27) for the storage of the unburnt fine particles which opens at its base onto the second recycling circuit (54) and provided with means (71) for regulating the particle recycling rate of flow.

6. A material processing installation according to one of the claims 3 to 5, characterised in that the processing device (30) is isolated from the processing reactor (1) by a siphon (36) provided in the conduit (34) discharging the particles (23) recovered in the separator (3) and communicating with the filtration compartment (4).

Fig 1

0 161 970

Fig 2